# EUROPÄISCHE PATENTSCHRIFT

(11) **EP 0 347 753 B1**
(45) Veröffentlichungstag und Bekanntmachung des Hinweises auf die Patenterteilung: **13.10.1993**
(21) Anmeldenummer: 89110875.5
(22) Anmeldetag: 15.06.1989
(51) Int. Cl.: F23G 7/06

(54) **Verfahren zur Reinigung von Abgasen aus CVD-Prozessen**
Process for purifying waste gazes from CVD-processes
Procédé pour la purification de gaz d'échappement

(30) Priorität: 15.06.1988 DD 316791
(43) Veröffentlichungstag der Anmeldung: 27.12.1989
(73) Patentinhaber: CENTROTHERM ELEKTRISCHE ANLAGEN GMBH + CO., 89143 Blaubeuren (DE)
(72) Erfinder: Krödel, Gunter, Dipl.-Ing., O-8080 Dresden (DE); Fabian, Lutz, Dr. rer. nat., O-8020 Dresden (DE); Möller, Rainer, Dr.-Ing., O-8023 Dresden (DE); Stelzer, Horst Dipl.-Chem., O-8080 Dresden (DE)

(56) Entgegenhaltungen:
- DE-A- 2 942 383
- US-A- 2 521 541
- PATENT ABSTRACTS OF JAPAN, Band 9, Nr. 235 (M415)(1958), 21. September 1985; & JP-A-60 89618 (TOUYOU SANSO K.K.) 20.05.1985

## Beschreibung

Die Erfindung betrifft ein Verfahren zur Reinigung von mit Schadstoffen angereicherten Abgasen aus CVD-Prozessen, insbesondere zur Reinigung von Abgasen aus Anlagen zur chemischen Bearbeitung von Halbleitersubstraten für die Herstellung mikroelektronischer Bauelemente mittels Niederdruckprozessen. Das Verfahren ist dort einsetzbar, wo Abgase toxische Schadstoffe enthalten.

Es sind bereits verschiedene Verfahren bekannt, mit denen Reaktionsabgase von Prozessen der chemischen Substratbearbeitung von toxischen Schadstoffen gereinigt werden können. So ist beispielsweise ein Verfahren beschrieben, bei dem Abgase von CVD-Reaktoren in intensiven Kontakt mit oxidierenden, wäßrigen Lösungen gebracht werden und damit insbesondere eine Reinigung der Abgase von Phosphor-, Arsen- und Borwasserstoffen erfolgt. Diesem Verfahren haftet aber der Mangel an, daß die Abgase von Niederdruckprozessen, die beständige Aerosole, insbesondere durch die Anwesenheit von Öldämpfen, enthalten, chemisch nur wenig beeinflußbar sind. Diese Nachtelle sind bei allen bekannten Sprühwäschern, Venturiwäschern und Waschtürmen vorhanden.

Es sind ferner Verfahren bekannt, bei denen Abgase, die brennbare Bestandteile enthalten, durch eine katalytische Nachverbrennung gereinigt werden. Diese Verfahren sind aber für die Reinigung der Abgase von Prozessen der chemischen Substratbearbeitung im Niederdruckbereich nicht geeignet, da durch die Bestandteile der Abgase, insbesondere durch Stäube und Öldämpfe, die Katalysatoren unbrauchbar würden.

Ein weiteres bekanntes Verfahren dient zur Beseitigung von niederkalorischen Gasgemischen, bei dem das zu reinigende Gas auf 500 bis 800° C vorgewärmt und anschließend mit Strahlungsheizung auf etwa 850 bis 1400° C erwärmt wird. Nachteilig an diesem Verfahren ist jedoch, daß Stäube aus dem Abgas nicht entfernt werden und die Prozeßführung sehr kompliziert und aufwendig ist. Eine andere bekannte Lösung betrifft ein Verfahren und eine Vorrichtung zur Plasmapyrolyse von Schad- und Giftstoffen, mit denen zwar einerseits Schadstoffe beseitigt werden können, andererseits aber infolge der hohen Temperaturen des Plasmabrenners neue Schadstoffe in Form von Stickoxiden entstehen. Außerdem erfordert der Betrieb eines Plasmabrenners einen hohen gerätetechnischen Aufwand. Hinzu kommt noch, daß Stäube nicht aus dem Abgas beseitigt werden.

Es sind schließlich auch Verfahren bekannt, bei denen brennbare Abgase in einer speziellen Brennkammer verbrannt werden. Diese Verfahren sind aber für viele Abgase von Prozessen der chemischen Substratbearbeitung im Niederdruckbereich nicht anwendbar, da diese Gase wegen des hohen N₂-Anteils nicht brennbar sind.

Die Aufgabe der Erfindung besteht darin, ein Verfahren zur Beseitigung von Schadstoffen aus Reaktionsabgasen von Prozessen der chemischen Substratbearbeitung im Niederdruckbereich anzugeben, bei dem die Prozeßführung der Substratbearbeitung nicht negativ beeinflußt und eine Belastung der Atmosphäre mit Schadstoffen vermieden wird.

Die Aufgabe wird anspruchsgemäß gelöst. Die abhängigen Ansprüche betreffen vorteilhafte Ausführungsformen.

Erfindungsgemäß wird die Aufgabe dadurch gelöst, daß die Abgase unter Sauerstoffüberschuß in der Brennkammer verbrannt, nachfolgend aus einem durch einen über der Brennkammer und davon beabstandet angeordneten Spritzschutzkegel gebildeten Ringspalt aus der Brennkammer herausgeführt und im separaten Reaktionsraum mit einem Sorptionsmittel intensiv in Kontakt gebracht werden, welches aus einer zentrisch über dem Spritzschutzkegel und davon beabstandet angeordneten Düsenanordnung kegelförmig gegen die Gasströmungsrichtung gesprüht wird, und gereinigt über die lufttechnische Anlage abgeleitet werden.

Der Reaktionsraum wird vor dem Beginn der Abgasbehandlung durch das Zünden eines Knallgasgemisches für eine Verbrennung in Bereitschaft gebracht. Das Abgas wird unter Beimischung von Sauerstoff (O₂), der im Überschuß zugeführt wird, durch einen im Reaktor vorgesehenen Brenner geleitet und in seinem Brennraum in einer Brenngasflamme verbrannt bzw. oxidiert. Der Brenner ist vorzugsweise im unteren Bereich des vertikal angeordneten Reaktors vorgesehen, und die oxidierten Gase werden aus dem Brennraum nach oben in eine nachgeschaltete lufttechnische Anlage geleitet. Bevor die oxidierten Gase den Brennraum verlassen, werden sie durch einen über dem Brennraum angeordneten Spritzschutzkegel derart beeinflußt, daß die oxidierten Gase durch einen Ringspalt zwischen dem Spritzschutzkegel und der Brennraumwandung in einen dem Reaktor zugehörigen äußeren Raum geleitet und an dessen Wandung mit einem von oben über dem Spritzschutzkegel gleichmäßig verteilten Sorptionsmittel intensiv in Kontakt gebracht werden.

Das Sorptionsmittel bewirkt das Binden der Im Abgas und durch die Oxidation vorhandenen festen Bestandteile, die mit dem Sorptionsmittel an der Wandung nach unten gespült und aus dem Reaktionsraum gefahrlos abgeleitet werden.

Der untere Rand des Spritzschutzkegels Ist vorzugsweise mit einem bürstenähnlichen Rand versehen, wobei die Borsten gleichmäßig auf dem Umfang verteilt und mit der Innenwandung des äußeren Mantelkörpers in Verbindung sind. Als Sorptionsmittel wird vorzugsweise Wasser eingesetzt, das durch eine über dem Spritzschutzkegel vorgesehene Düse kegelförmig nach unten gesprüht wird.

Durch das erfindungsgemäße Verfahren ist es möglich, SiH₄, PH₃, B₂H₆, Öldämpfe und ähnliche toxische Stoffe, die aus den Abgasen von chemischen Substratbearbeitungsverfahren stammen, zu oxidieren und die festen Oxidationsprodukte, wie SiO₂, P₂O₅, B₂O₃ sowie andere Bestandteile des Abgases, wie HCl und NH₃, durch das Sorptionsmittel gefahrlos auszuwaschen.

### Ausführugsbeispiel

In einer Niederdruckanlage für chemische Gasphasenabscheidung soll Phosphorglas auf Si-Scheiben abgeschieden werden. Die Abscheidetemperatur beträgt 450° C und der Arbeitsdruck 100 Pa. In das Reaktionsrohr der Anlage werden SiH₄, PH₃, N₂O und N₂ eingespeist. Außerdem wird noch N₂ zur Druckregelung in den Pumpenstutzen und zur Pumpenspülung eingespeist. Die gesamte Abgasmenge, die die Pumpe verläßt, beträgt ca. 10 l/min, wobei der Hauptanteil des Abgases N₂ ist. Zusätzlich sind SiH₄, PH₃ und N₂O im Abgas vorhanden, da der Umsetzungsgrad Kleiner als 100 % ist. Dazu kommen noch verschiedene Oxidationsstufen dieser Medien, Öldämpfe sowie Stäube (SiO₂). Dieses Gas-/Feststoffgemisch wird in das Zentrum eines Knallgasbrenners der Abgasreinigungsanlage geleitet, der mit O₂-Überschuß betrieben wird und in der Flamme oxidiert. Der Gasverbrauch des Brenners beträgt etwa 5 l/min H₂ und 3 l/min O₂. Das Gas durchströmt die Brennkammer, die senkrecht angeordnet ist, und verläßt sie im oberen Teil. Über der Brennkammer befindet sich eine Spritz-düse, aus der Wasser kegelförmig in den Innenraum und gegen die Innenwandung des äußeren Mantelkörpers gesprüht wird.

Das Gas durchdringt den Sprühkegel, wobei es gekühlt und von weiteren Oxidationsprodukten gereinigt wird, verläßt die Abgasreinigungseinrichtung und gelangt in die lufttechnische Anlage.

Das Wasser des Sprühkegels spritzt gegen ein konzentrisch zur Brennkammer angeordnetes Rohr und läuft in einem gleichmäßigen Wasserfilm nach unten ab. Ein Teil des Wassers fließt im unteren Teil in die Brennkammer und spült Oxidationsprodukte aus der Brennkammer. Der Gesamtwasserdurchsatz beträgt etwa 3 l/min.

Die Vorteile der erfindungsgemäßen Lösung ergeben sich insbesondere aus der mit der Vernichtung der toxischen Schadstoffe gleichzeitig stattfindenden Verbrennung der Pumpenölrückstände.

## Patentansprüche

1. Verfahren zur Reinigung von mit Schadstoffen angereicherten Abgasen aus CVD-Prozessen in Anlagen zur chemischen Bearbeitung von Halbleitersubstraten für die Herstellung mikroelektronischer Bauelemente mittels Niederdruckprozessen, wobei die zu reinigenden Abgase nach Verlassen einer Vakuumpumpeneinheit in einem separaten, mit einer lufttechnischen Anlage verbundenen aus Brenn- und Waschkammer bestehenden Reaktionsraum einer Nachbehandlung unterzogen werden, gekennzeichnet dadurch, daß die Abgase unter Sauerstoffüberschuß in der Brennkammer verbrannt, nachfolgend aus einem durch einen über der Brennkammer und davon beabstandet angeordneten Spritzschutzkegel gebildeten Ringspalt aus der Brennkammer herausgeführt und im separaten Reaktionsraum mit einem Sorptionsmittel intensiv in Kontakt gebracht werden, welches aus einer zentrisch über dem Spritzschutzkegel und davon beabstandet angeordneten Düsenanordnung kegelförmig gegen die Gasströmungsrichtung gesprüht wird, und gereinigt über die lufttechnische Anlage abgeleitet werden.

2. Verfahren gemäß Anspruch 1, dadurch gekennzeichnet, daß das Sorptionsmittel so geführt wird, daß die Oxidationsprodukte aus dem Reaktionsraum gespült werden.

3. Verfahren nach Anspruch 1 oder 2, dadurch gekennzeichnet, daß als Sorptionsmittel Wasser verwendet wird.

## Claims

1. Process for cleaning toxic waste gases from chemical vapour deposition processes in facilities used for the chemical processing of semi-conductor substrates for the manufacture of micro-electronic components using low pressure processes where the waste gases to be cleaned are subsequently treated after leaving a vacuum pump unit in a separate reaction chamber comprising a combustion and washing chamber connected to an extractor system. The process has the following characteristics: The waste gases are combusted in a superfluity of oxygen and subsequently channelled out of the combustion chamber via a ring gap formed by a spray guard cone located above the combustion chamber and thus at a distance to the former, and brought into intensive contact with a sorption agent in the separate reaction chamber, the sorption agent being sprayed in a conical form counter to the direction of gas flow from a spray guard cone and thus at a distance from it, the cleaned gas then being discharged via the pneumatic system.

2. Process as per claim 1. Other and further characteristics are as follows. The sorption agent is applied in such a way that the oxidizing products are rinsed from the reaction chamber.

3. Process as per claim 1 or 2. Other and further characteristics are as follows. Water is used as a sorption agent.

## Revendications

1. Appareil pour le nettoyage des gaz d'échappement enrichis en produits nocifs et provenant de procédés CVD, dans des installations de traitement chimique de substrats de semiconducteurs pour la fabrication d'éléments de construction microélectroniques au moyen de procédés à basse pression, où les gaz d'échappement à nettoyer, après avoir quitté une unité de pompe à vide, sont soumis à un retraitement dans un espace de réaction séparé constitué d'une chambre de combustion et de lavage et relié à une installation d'aérage. Cet appareil est caractérisé par le fait que les gaz d'échappement soient brûlés sous excédent d'oxygène dans la chambre de combustion, évacués ensuite de la chambre de combustion par une fente circulaire formée par un carter de protection conique disposé au-dessus de la chambre de combustion et écarté d'elle. Ensuite, dans l'espace de réaction séparé, ils sont mis en contact intensif avec un agent de sorption qui, par un dispositif de pulvérisation centré audessus du carter de protection conique et écarté de lui, est pulvérisé en jet conique dans le sens inverse de la direction d'écoulement du gaz. Lorsqu'ils sont nettoyés, les gaz sont évacués par l'installation d'aérage.

2. Appareil selon la spécification 1, caractérisé par le fait que l'agent de sorption soit guidé de telle sorte que les produits d'oxydation soient évacués de l'espace de réaction par lavage.

3. Appareil selon la spécification 1 ou 2, caractérisé par l'utilisation d'eau comme agent de sorption.
